# EUROPEAN PATENT APPLICATION

(11) **EP 0 936 793 A1**
(43) Date of publication of application: **18.08.1999**
(21) Application number: 98660131.8
(22) Date of filing: 30.11.1998
(51) Int. Cl.: H04M 1/72, G09G 3/36

(54) **A method and an arrangement for conserving power in a mobile station**

(30) Priority: 02.12.1997 FI 974393
(71) Applicant: NOKIA MOBILE PHONES LTD., 02150 Espoo (FI)
(72) Inventor: Kallunki, Markku, 90550 Oulu (FI); Väyrynen, Pekka, 90240 Oulu (FI)
(74) Representative: Levlin, Jan Markus

(57) **Abstract**

The invention relates to a method and to an arrangement for conserving power in a mobile phone. According to the invention the mobile phone's display unit (11) is controlled into the active state and the inactive state, respectively, on the basis of the light intensity of the environment. A display unit (11) here means the display (17) and the display driver. As a result of the pressing of a key of the keyboard the display unit (11) is controlled into the active state for a predetermined time. The arrangement for conserving power in a mobile phone comprises a measuring arrangement (12) for detecting the light intensity of the environment, a processing unit (13) for processing the light intensity information, and a switch unit (14) for switching the state of the display unit (11) into the active/inactive state on the basis of the light intensity.

## Description

The invention relates to a method defined in the preamble of claim 1 and to an arrangement defined in the preamble of claim 3 for conserving power in a mobile phone and a mobile phone comprising the arrangement of claim 3 as defined in the preamble of claim 8. A particular object of the invention is to conserve power in a mobile phone's display unit, which here means the display and the display driver.

There are already known computer display savers, which switch off the display. The off-switching is made on the basis of the computer keyboard, when it has not been used.

A problem in known devices is that they do not observe that a small device can be located in a transport space, such as a briefcase, where the display of the device is not required.

A further problem in known devices is that they are only intended for computer use.

Further it is not possible to adapt present day devices as such into mobile phone where certain information must always be shown, when the mobile phone is in a situation where the display is visible.

The object of the invention is to obviate the above mentioned disadvantages.

The method according to the invention is characterised in what is presented in claim 1. The arrangement according to the invention is characterised in what is presented in claim 3. The mobile phone according to the invention is characterised in what is presented in claim 8. Preferred embodiments of the invention are presented in the dependent claims.

The invention relates to a method for conserving power in a mobile phone. According to the invention the display unit of the mobile phone is controlled into the active state and into the inactive state, respectively, on the basis of the environment light intensity. A display unit means here the display and the display controller.

In one embodiment the display unit is controlled into the active state for a predetermined time as the result of the pressing of a key on the keyboard.

The invention also relates to an arrangement for conserving power in a mobile phone. According to the invention it comprises a measuring arrangement for detecting the light intensity in the environment, a processing unit for processing the light intensity information, and a switch unit for connecting the display unit into the active/inactive state on the basis of the light intensity.

In one embodiment of the invention said measuring arrangement comprises a photoresistor for detecting the level of the light intensity, and a pull-up resistor for creating a potential point between the resistors. Said light dependent resistor can be replaced by a conventional resistor, and a phototransistor can be connected in parallel with the pull-up resistor.

In one embodiment of the invention said measuring arrangement comprises a photodiode generating the display illumination, for detecting the light intensity when the photodiode does not generate light. In the off-state the photodiode reacts on the light intensity of the environment.

In one embodiment of the invention said processing unit comprises an analogue-to-digital converter for converting the light intensity information into a digital form, and a processor for processing the light intensity information and for determining the state of the display unit.

In one embodiment of the invention said control unit comprises a switch transistor for connecting the operating voltage to the display unit and a switch transistor for connecting the clock signal to the display unit.

The invention also relates to a mobile phone comprising an arrangement for saving power. According to the invention the arrangement comprises: a display, a measuring arrangement for detecting information of light intensity of an environment, a processing unit for processing the information of the light intensity of the environment and a switch unit for switching a state of the display into an active/inactive state on the basis of the light intensity.

The advantage of the invention is that an activated mobile phone, which is placed in a substantially dark place, will conserve power by switching off the display unit. Any external illumination or the pressing of a key will restart the display unit.

The invention is described in detail below with reference to the enclosed drawing, in which:
Figure 1 shows the method according to the invention as a flow diagram;
Figure 2 shows in a block diagram the essential components of the invention in an arrangement according to the invention;
Figure 3 shows in a section a detail of an embodiment of the invention;
Figure 4 shows in a block diagram the essential components of a mobile phone according to the invention; and
Figure 5 shows a mobile phone according to the invention.

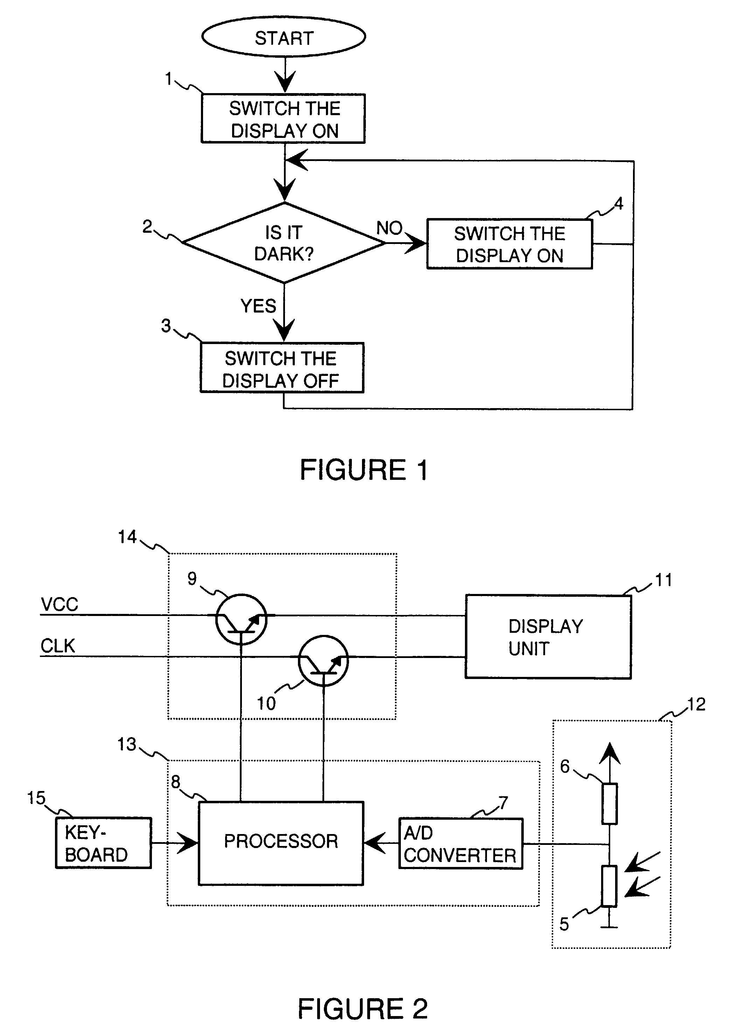

Figure 1 shows in a flow diagram the most essential functions of the method according to the invention. First in block 1, when the mobile phone is switched on, the display is also activated or switched on in a normal manner. The light intensity of the environment is examined, or it is studied whether light 2 is detected or not in the environment. If it is substantially dark, the display is switched off 3, but if light is detected, the display is kept on or it is switched on 4.

In the embodiment of figure 2 the arrangement according to the invention for conserving power in a mobile phone comprises a measuring arrangement 12 for detecting the light intensity of the environment, a processing unit 13 for processing the light intensity information, and a switch unit 14 for switching the state of the display unit 11 into the active/inactive state on the basis of the light intensity.

The measuring arrangement 12 of figure 2 comprises a photoresistor 5 and a pull-up resistor 6. In the point between these the potential changes according to the intensity of the illumination in the environment. The processing unit 13 comprises an analogue-to-digital converter 7 and a processor 8. Digital data for the processor 8 is generated from said potential by the analogue-to-digital converter 7. The switch unit comprises the switch transistors 9 and 10. The processor 8 controls with the aid of the switch transistors 9 and 10 the supply of the operating voltage VCC and the clock signal CLK to the display unit 11. The control is most preferably made so that the transistors connect or disonnect the signal paths.

As an example we consider how an activated mobile phone is kept in a briefcase. The mobile phone is activated, whereby the display is switched on 1. Examination of the environment illumination is begun 2, preferably after a predetermined delay. When the mobile phone is placed in said briefcase, and the briefcase is closed, the illumination level in its environment is changed, for instance from a normally illuminated room to a substantially dark space. The changed illumination is detected with a circuit 5, 6 containing a photoresistor 5. An analogue-to-digital converter 7 transmits the information to the processor 8, which concludes 2 that the mobile phone is in an essentially dark place. Therefore, in order to conserve power, the display is switched off 3 by controlling the transistors 9, 10 into a disconnected state, so that no operating voltage nor clock signal is conducted to the display driver 11. When the briefcase is opened, the photoresistor 5 of the mobile phone receives light, which causes the result of the comparison 2 to change so that the display is switched on 4.

The invention is most preferably realised by combining the display illumination with it, so that when the mobile phone is in a substantially dark place, the display, the display driver 11 and the display illumination can each be switched on by pressing any key of the keyboard 15. The processor 8 receives as input information the pressing of the key of the keyboard 15. The information about the pressing of a key causes a blocking in the routines of the processor 8, which prevents the display unit 11 from being switched off during a predetermined time. Thus the mobile phone can be used also in a substantially dark place with the aid of the display and keyboard illumination.

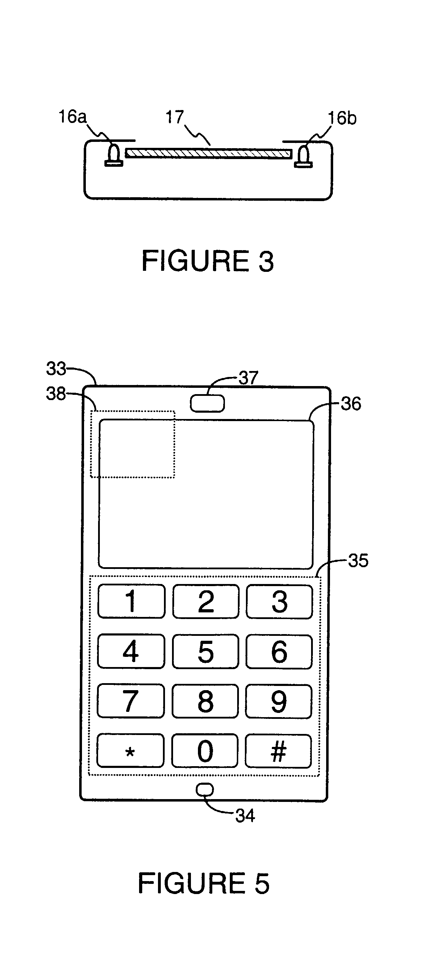

Figure 3 shows a detail of an embodiment of an arrangement according to the invention. The measuring arrangement 12 comprises a photodiode 16a, 16b generating the display illumination, for detecting the illumination level when the photodiode 16a, 16b is not generating light. On the left in the figure there is the first photodiode 16a providing the display illumination and the light intensity information, and on the right there is the second photodiode 16b. The display 17 is seen in the middle.

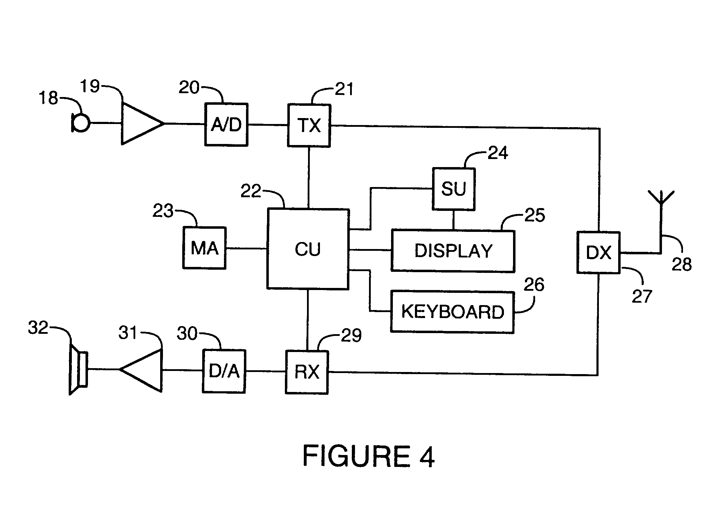

Figure 4 shows a block diagram of a mobile phone according to a preferable embodiment of the invention. The mobile phone comprises a microphone 18, a keyboard 26, a display 25, an earpiece 32, an antenna duplexer 27, an antenna 28 and a processing unit 22, which all are typical components of a conventional mobile phone. Further, the mobile phone contains a transmitter TX 21 and a receiver RX 29. The transmitter 21 comprises functionality necessary for speech and channel coding, encryption, and modulation, and necessary radiofrequency circuitry for amplification of signal for transmission.

The receiver 29 comprises amplifier circuits and functionality necessary for demodulating and decryption the signal, and removing channel and speech coding. The signal produced by the microphone 18 is amplified in an amplifier 19 and converted to digital form in an A/D converter 20, whereafter the signal is taken to the transmitter 21. The transmitter encodes the signal that is in digital form and produces a modulated and amplified radiofrequency RF signal, whereafter the RF signal is taken to the antenna 28 via the duplexer 27. The receiver 29 demodulates signal received and removes the encryption and channel coding. Resulting speech signal is converted to analog form in a D/A converter 30, the output signal of the D/A converter 30 is amplified in an amplifier 31, whereafter the amplified signal is taken to the earphone 32.

The processing unit 22 is used to control all the functions of the mobile phone, to read commands given by a user via the keyboard 26 and to display messages to the user via a display 25. In addition the control unit 22 is used to read a measuring arrangement MA 23 for detecting the light intensity of the environment and to control a switch unit SU 24 for switching the state of the display 25 into the active/inactive state on the basis of the light intensity.

Figure 5 shows a mobile phone 33 according to the invention. The mobile phone 33 comprises a microphone 34, a keyboard 35, a display 36, an earphone 37 and the arrangement 38 of the invention.

The power consumption of the display and the display driver is typically 1 to 2 mA. When the method according to the invention is not used the power consumption of a mobile phone is in the normal mode about 60 mA and in the saving mode 5 to 6 mA. When the mobile phone is in the normal mode 1/8 of the time and in the saving mode 7/8 of the time, then a maximal power saving of about 12 % is achieved with the method according to the invention, when the mobile phone is continuously in the dark. The power consumption of the circuit detecting the illumination is most preferably less than 10 µA.

The invention is suited to be used in small battery operated portable devices, particularly in mobile phones.

The invention is not limited to relate only to the above presented embodiment examples, but many modifications are possible within the inventive idea defined in the claims.

## Claims

1. A method for conserving power in a mobile phone, **characterised** in that a display unit (11) of the mobile phone is controlled into an active state (4) and into an inactive state (3), respectively, on the basis of light intensity of an environment.

2. A method according to claim 1, **characterised** in that pressing a key on a keyboard controls the display unit (11) into the active state (4) for a predetermined time.

3. An arrangement for saving power in a mobile phone, **characterised** in that it comprises:
- a display unit (11),
- a measuring arrangement (12) for detecting information of light intensity of an environment;
- a processing unit (13) for processing the information of the light intensity of the environment; and
- a switch unit (14) for switching a state of the display unit (11) into an active/inactive state on the basis of the light intensity.

4. An arrangement according to claim 3, **characterised** in that said measuring arrangement (12) comprises:
- a photoresistor (5) for detecting level of the light intensity; and
- a pull-up resistor (6) for creating a potential point between the resistors.

5. An arrangement according to claim 3, **characterised** in that said measuring arrangement (12) comprises a photodiode (16a, 16b) providing a display illumination for detecting level of the light intensity when the photodiode (16a, 16b) does not generate light.

6. An arrangement according to claim 3, **characterised** in that said processing unit (13) comprises:
- an analogue-to-digital converter (7) for transforming the information of the light intensity into a digital form; and
- a processor (8) for processing the information of the light intensity and for determining the state of the display unit (11).

7. An arrangement according to claim 3, **characterised** in that said switch unit (14) comprises:
- a switch transistor (9) for switching an operating voltage to the display unit (11); and
- a switch transistor (10) for switching a clock signal to the display unit (11).

8. A mobile phone (33) comprising an arrangement (38) for saving power, **characterised** in that the arrangement (38) comprises:
- a display (25, 36);
- a measuring arrangement (23) for detecting information of light intensity of an environment;
- a processing unit (22) for processing the information of the light intensity of the environment; and
- a switch unit (24) for switching a state of the display (25, 36) into an active/inactive state on the basis of the light intensity.

9. A mobile phone (33) according to claim 8, **characterised** in that said measuring arrangement (12) comprises:
- a photoresistor (5) for detecting level of the light intensity; and
- a pull-up resistor (6) for creating a potential point between the resistors.

10. A mobile phone (33) according to claim 8, **characterised** in that said measuring arrangement (12) comprises a photodiode (16a, 16b) providing a display illumination for detecting level of the light intensity when the photodiode (16a, 16b) does not generate light.
